# EUROPÄISCHE PATENTSCHRIFT

(11) **EP 0 688 090 B1**
(45) Veröffentlichungstag und Bekanntmachung des Hinweises auf die Patenterteilung: **14.05.1997**
(21) Anmeldenummer: 95890106.8
(22) Anmeldetag: 07.06.1995
(51) Int. Cl.: H02K 9/197

(54) **Kühlsystem für einen Motor**
Motor cooling system
Système de refroidissement pour un moteur

(30) Priorität: 13.06.1994 AT 1179/94
(43) Veröffentlichungstag der Anmeldung: 20.12.1995
(73) Patentinhaber: ABB Daimler-Benz Transportation Austria GmbH, 2351 Wiener Neudorf (AT)
(72) Erfinder: Neudorfer, Harald, Ing., A-2351 Wiener Neudorf (AT); Gukenbiehl, Karl Ludwig, Dipl.-Ing., A-2371 Hinterbrühl (AT)
(74) Vertreter: Köhler-Pavlik, Johann, Dipl.-Ing.

(56) Entgegenhaltungen:
- EP-A- 0 660 492
- WO-A-90/09053
- WO-A-94/06196
- DE-A- 2 052 808
- DE-U- 1 636 665
- PATENT ABSTRACTS OF JAPAN vol. 9 no. 315 (E-365) [2038] ,11.Dezember 1985 & JP-A-60 148355 (YASUKAWA DENKI SEISAKUSHO K.K.) 5.August 1985,

## Beschreibung

Die Erfindung betrifft ein Kühlsystem für eine elektrische Maschine gemäß dem Oberbegriff des Patentanspruchs 1.

Bei den bekannten Maschinen dieser Art ist der außenliegende Stator von einem Kühlmantel mit meist mäanderförmig verlaufendem Kanal umschlossen, welcher von einem Kühlmittel (einem Wasser-Glykol-Gemisch, Öl oder ähnlichem) durchströmt wird. Der Nachteil dieser Kühlung besteht bei einem Motor, insbesondere Kurzschlußläufer darin, daß die Wärme der Rotorwelle und ihrer Lagerung nur über Umwege über das Blechpaket, den Luftspalt zum Stator und dgl. an den Statorkühlmantel abgeleitet werden kann. Dies hat zur Folge, daß die Lagertemperatur, vor allem im Innenring, sehr stark ansteigt, weil die Verluste in den leitfähigen Rotorteilen (Kupferwicklung) und die Eisenverluste, nicht genügend rasch abgeführt werden können. Es bestehen bereits Vorschläge für eine Wellenkühlung, die jedoch nicht befriedigend waren.

Zur Schaffung eines Kühlsystems, durch welches eine hohe Leistungsauswertung der Maschine ermöglicht und die auch für gekapselte Motore angewendet werden kann, welche den Vorteil haben, daß sie geräuscharm sind, wurde bereits - beispielsweise in der WO 90/09053 oder der DE-PS 614 536 - vorgeschlagen, daß die Rotorwelle hohl ausgeführt ist und im Hohlraum ein Rohr eingesetzt ist, sodaß ein innerer Kanal und ein diesen inneren Kanal ringspaltförmig umgebender äußerer Kanal gebildet ist, durch welches das vorzugsweise flüssige Kühlmittel geführt wird, wobei die Einbringungs- und die Ausbringungsöffnung für das Kühlmittel in das Kanalsystem vorzugsweise auf der selben Seite der Rotorwelle vorgesehen sind.

Eine Kühlsystem für eine elektrische Maschine, gemäß dem Oberbegrift des Patentanspruchs 1 ist auch aus dem deutschen Gebrauchsmusters DE-U-1 636 665 bekannt.

Bei derartigen Systemen besteht aber immer das Problem der möglichst verlustfreien Einbringung des Kühlmediums aus den stehenden Teilen der Maschine in die rotierenden Teile ohne eine negative Beeinflußung der Leistung und ohne Probleme der Standfestigkeit des Kühlsystems bezüglich Abnützung, beides aufgrund der Reibung zwischen mit hoher Relativgeschwindigkeit gegeneinander rotierendenden Teilen.

Das Ziel der vorliegenden Erfindung war nun ein Kühlsystem, bei welchem die oben angesprochenen Nachteile bekannter Systeme vermieden werden und welches eine möglichst vollständige Einbringung von Kühlmedium in die Rotorwelle unter Vermeidung von Reibungs- und Dichtungsproblemen erlaubt.

Diese Aufgabe wird bei einem Kühlsystem der eingangs erwähnten Art durch die Merkmale des kennzeichnenden Teiles des Patentanspruches 1 gelöst. Die in das Innere der Rotorwelle gerichtete Düse erzeugt eine in die gewünschte Richtung gerichtete Strömung, welche Kühlmedium vom Bereich um die Düse noch in Art einer Wasserstrahlpumpe nachsaugt.

Weitere Merkmale der Erfindung werden anhand der Zeichnungen näher erläutert, in welchen zwei Ausführungsbeispiele des erfindungsgemäßen Kühlsystemes dargestellt sind.

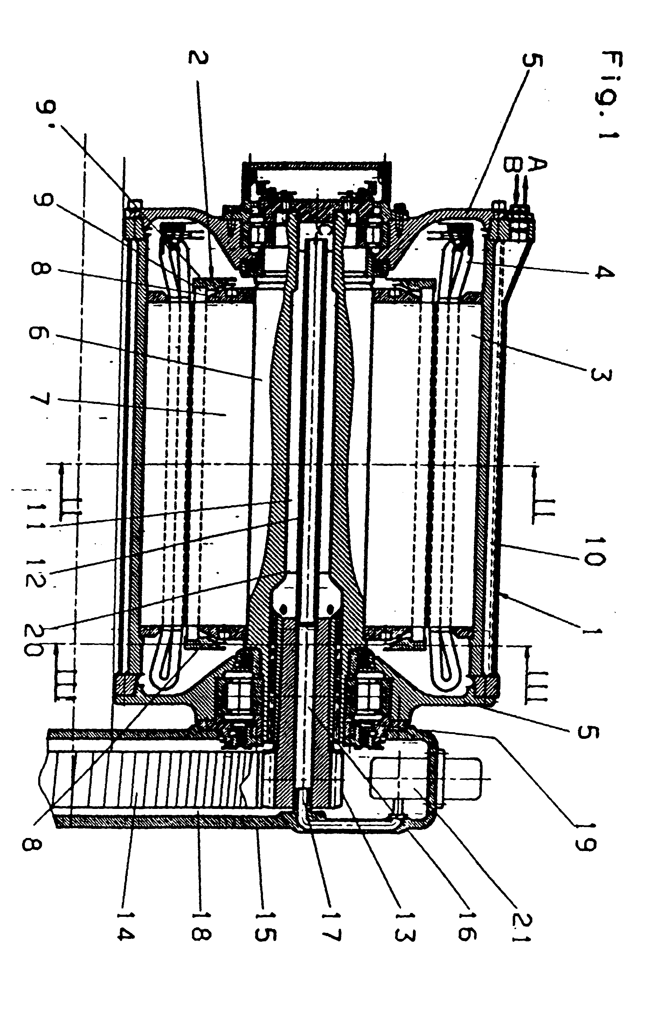

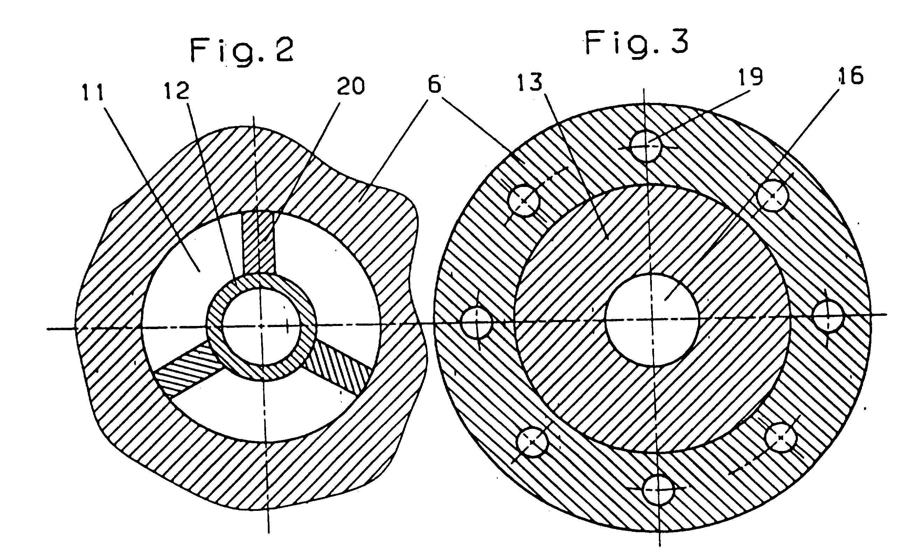

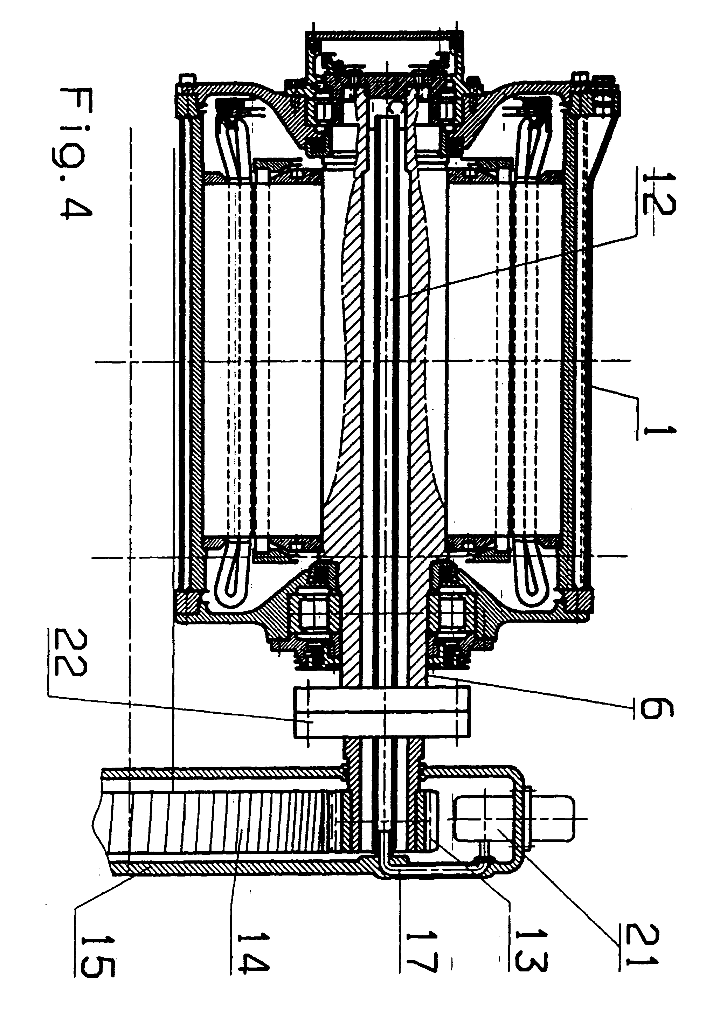

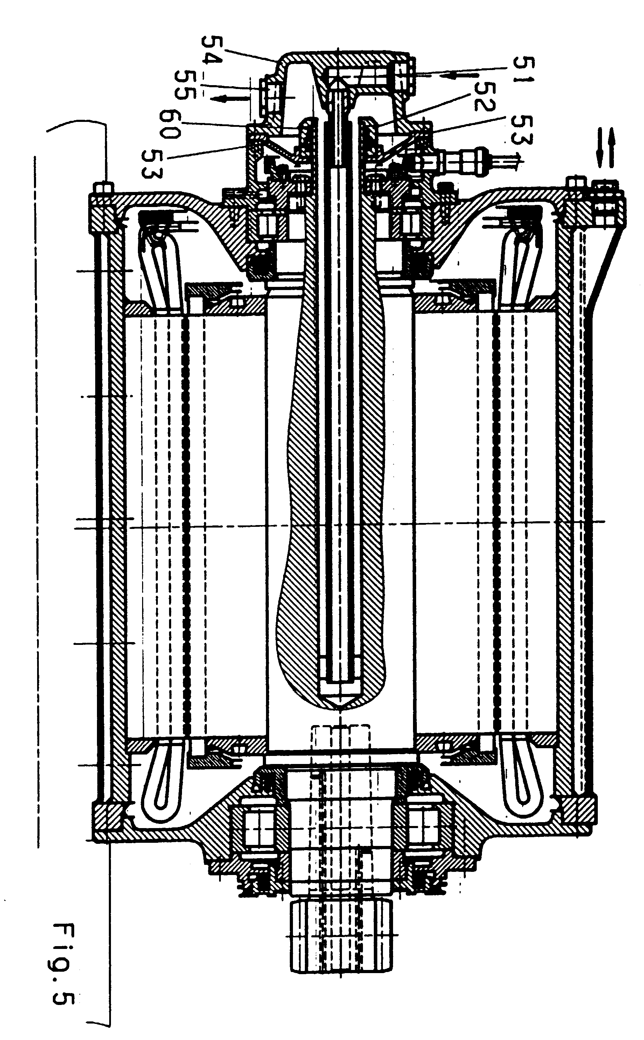

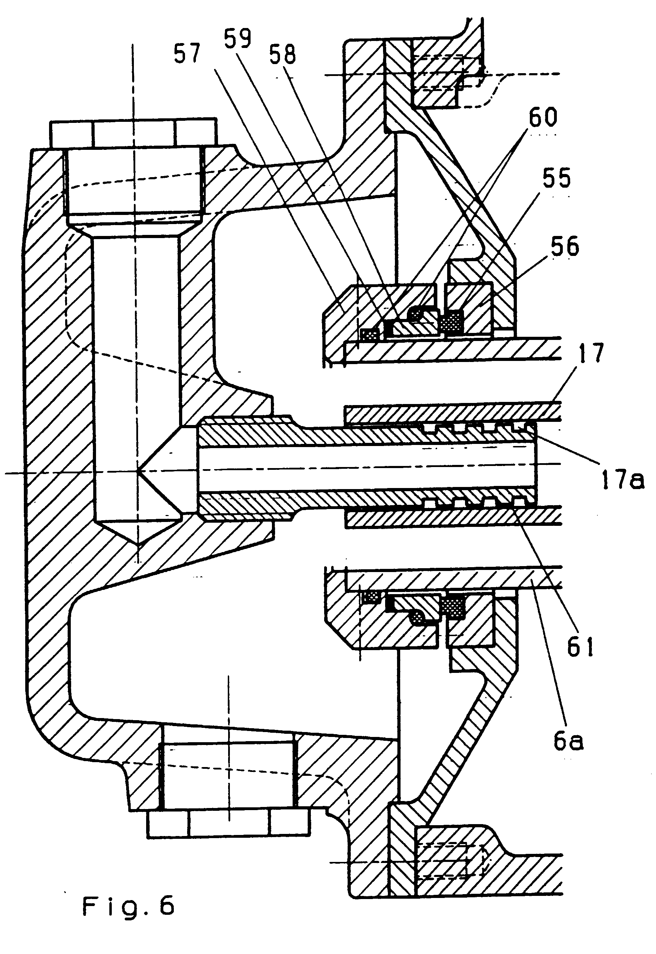

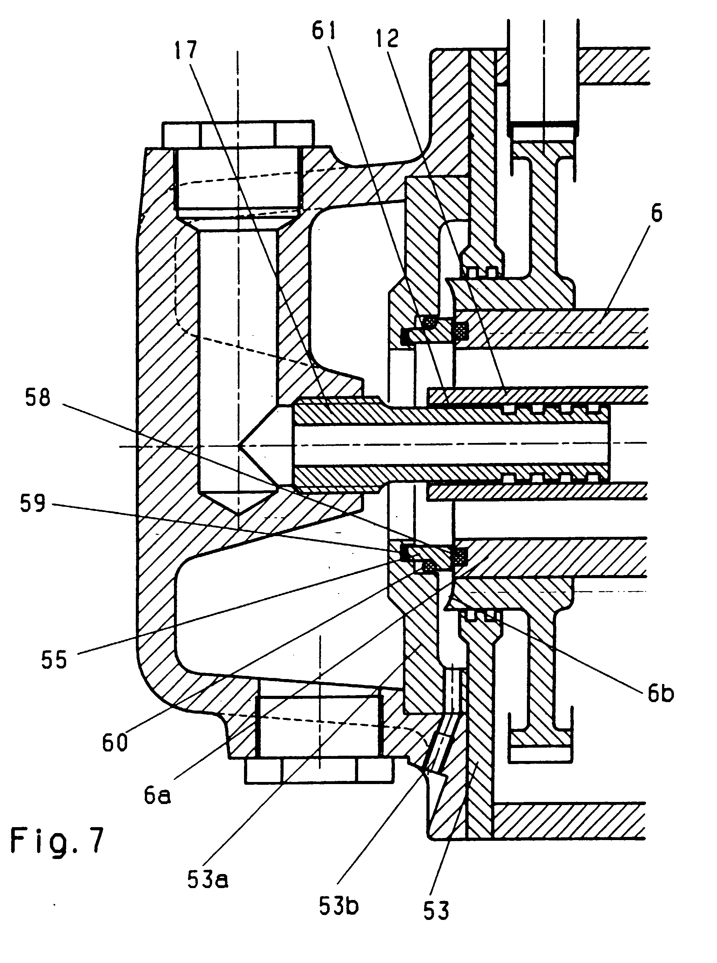

Es zeigen Fig. 1 einen Querschnitt eines Traktionsmotors mit Getriebe und mit Wellenkühlung durch das Getriebeöl, Fig. 2 einen Schnitt nach der Linie II-II der Fig. 1, Fig. 3 einen Schnitt nach der Linie III-III der Fig. 1, Fig. 4 eine weitere Ausführungsform des Kühlsystems mit Getriebeöl als Kühlmittel, Fig. 5 ist ein Querschnitt entsprechend der Fig. 1 durch einen Traktionsmotor mit Wellenkühlung durch ein zusätzlich zugeführtes Kühlmittel, Fig. 6 ist ein vergrößerter Ausschnitt im Bereich des nichtantriebsseitigen Endes der Rotorwelle des Motors von Fig. 5 mit einer bevorzugten Ausführungsform der Gleitringdichtung und Fig. 7 ein Ausschnitt gemäß Fig. 6 einer anderen Ausführungsform.

Der in den Zeichnungsfiguren dargestellte Motor besteht aus einem feststehenden Teil, dem Ständer oder Stator 1 und einem umlaufenden Teil, dem Läufer 2 oder Rotor. Auf einem inneren Kreisumfang des Stators 1 ist in Nuten eines Statoreisenblechpaketes 3 eine Statorwicklung 4 eingebettet. Der Läufer 2 besitzt eine in Lagerschildern 5 gelagerte Rotorwelle 6, auf welcher ein Eisenblechpaket 7 durch Preßringe 8 zusammengespannt ist, von welchen je einer zu beiden Seiten des Blechpaketes auf der Welle 6 festgehalten ist. In Umfangsnuten des Eisenblechpaketes 7, welche in Winkelabständen verlaufen, sind leitende Rotorstäbe 9 eingefügt, deren Enden zu beiden Seiten des Rotors 2 durch Kurzschlußringe 9' miteinander leitend verbunden sind.

Der Stator 1 ist von einem Kühlmantel 10 umschlossen, welcher einen spiralförmigen oder mäanderförmigen Durchflußkanal besitzt und von einem Kühlmittel, meist einem Wasser-Glykol-Gemisch durchflossen ist. Die Pfeile A, B deuten den Ein- bzw. Austritt des Gemisches an. Selbstverständlich können im Rahmen der Erfindung im Stator andere Kühlsysteme angewendet werden. So ist beispielsweise eine Rippenkühlung möglich.

Auf der Rotorwelle 6 sitzt am antriebsseitigen Ende ein in dieses eingesetzte, von der Rotorwelle 6 mitgenommenes Ritzel bzw. Kleinrad 13, welches ein Großrad 14 antreibt, das im Fall der elektrischen Maschine als Traktionsmotor die zumindest eine Antriebsachse der Lokomotive bzw. des Fahrzeuges mitnimmt. Das Kleinrad 13 und das Großrad 14 sind von einem Getriebekasten 15 umschlossen, welcher zum Unterschied von der dargestellten Ausführung auch doppelmantelig ausgebildet sein kann.

Die Rotorwelle 6 ist hohl ausgeführt und bildet einen axialen Hohlraum 11, in welchen ein Rohr 12 axial eingesetzt und darin, wie Fig. 2 zeigt, durch drei in gleichen Winkelabständen angeordnete Abstandhalter 20 abgestützt ist. Natürlich können auch mehr Abstandhalter 20, vorzugsweise sechs entlang des Umfanges des Rohres 12 gleichverteilte Abstandhalter 20, vorgesehen sein. Die Abstandhalter 20 können nur über einen Teil der Länge des Rohres 12, allenfalls an mehreren Stellen entlang des Rohres 12, vorgesehen sein oder sich über die im wesentlichen gesamte Länge des Rohres 12 als durchgehende Leisten erstrecken, wie dies in der Fig. 5 dargestellt ist. Als Material für das Rohr 12 kommt vorzugsweise Kupfer bzw. eine Kupferlegierung zur Anwendung, das dies den besten Wärmeübergang von den Rotorbauteilen auf das Kühlmittel gewährleistet.

Das Rohr 12 schließt am antriebsseitigen Ende der Rotorwelle 6 an einen axialen Hohlraum 16 des Kleinrades 13 an, in welchen ein Leitungssystem aus dem Ölraum 18 des Getriebekastens 15 über eine koaxial zur Rotorwelle 6 angeordnete Düse 17 mündet. Der Abschnitt des Kleinrades 13, in welchen die Düse 17 eingesetzt ist, kann natürlich auch kürzer ausgeführt oder das Rohr 12 auf die Düse 17 hin verlängert sein, sodaß die Düse 17 direkt in das Rohr 12 mündet. Das Rohr 12 ist vom Hohlraum 11 der Rotorwelle 6 umschlossen, welcher an seinem dem Kleinrad 13 abgekehrten Ende mit dem Rohr 12 kommuniziert und am anderen Ende über Kanäle 19 in den Ölraum 18 des Getriebekastens 15 mündet. Im vorliegenden Falle sind, wie aus Fig. 3 ersichtlich ist, am antriebsseitigen Ende der Rotorwelle 6 acht in gleichen Winkelabständen angeordnete Kanäle 19 vorgesehen, welche sich, wie Fig. 1 zeigt, entlang des in die Rotorwelle 6 eingesetzten Teiles des Kleinrades 13 erstrecken.

Anstelle der Kanäle 19 kann auch ein ringförmiger Spalt um das Rohr 12 vorgesehen sein, durch welchen das vom Hohlraum 11 der Rotorwelle 6 ausströmende Öl in den Ölraum 18 des Getriebekastens 15 zurückfließt. Diese Ausführungsform ist insbesondere bei Motoren mit Nabenritzeln vorgesehen und vorteilhaft.

Gemäß einer Variante der Erfindung wird das Getriebeöl aus dem Getriebekasten 15 mittels einer Pumpe 21 über die Düse 17 in das Rohr 12 axial eingespritzt und am Ende desselben, wie mit Pfeil C angedeutet ist, in den Hohlraum 11 umgelenkt, aus welchem es über die Kanäle 19 in den Ölraum 18 des Getriebekastens 15 zurückfließt.

Selbstverständlich können im Rahmen der Erfindung verschiedene konstruktive Änderungen vorgenommen werden. So besteht die Möglichkeit, bei einer doppelmanteligen Ausbildung des Gehäuses des Getriebekastens 15 und der dadurch besseren Rückkühlung der Getriebeöle in den Innenraum die Kühlflüssigkeit aus dem Kühlraum des Stators einzuleiten und durch die Strömungskraft, beispielsweise eine Turbine, anzutreiben, welche die Ölpumpe 21 antreibt. Weiters besteht die Möglichkeit, im oder um das Rohr 12 die Abstandhalter 20 schraubenförmig auszubilden oder allgemein den Durchflußkanal zumindest zum Teil schraubenförmig um die Drehachse der Rotorwelle 6 verlaufend zu gestalten, wodurch die Drehung der Rotorwelle 6 eine Saugwirkung bewirken würde, durch welche das Kühlmittel, wie beispielsweise auch das Öl aus dem Ölsumpf über ein Rohr, welches die Düse 17 ersetzt, angesaugt wird. In diesem Fall könnte jegliche Pumpe für das Kühlmittel, etwa die Pumpe 21, entfallen. Besonders vorteilhaft ist diese Variante für Einrichtungsfahrzeuge.

Schließlich ist eine Ausführungsform nach Fig. 4 möglich, bei welcher eine Verlängerung der Rotorwelle 6 in den Getriebekasten 15 oder zur Verbindungsstelle mit der Kühlmittelleitung durch eine Kupplung 22 führt, wobei die Verlängerung durchbohrt ist und das Getriebeöl durch die Bohrung und die Kupplung 22 in das Kanalsystem der Rotorwelle 6, vorzugsweise das Rohr 12, gelangen kann.

In Fig. 5 ist eine andere erfindungsgemäße Variante der Wellenkühlung dargestellt, bei welcher das Kühlmittel auf der Nichtantriebsseite des Motors bzw. der Rotorwelle 6 zugeführt und auch wieder abgeführt wird. Gleiche Bauteile wie in den Fig. 1 bis 4 sind auch mit gleichen Bezugszeichen bezeichnet. Durch einen Kühlmittelzuflußkanal 51 wird das Kühlmittel, das in diesem Fall beispielsweise ein Wasser-Glykol-Gemisch, Öl oder eine andere herkömmliche Kühlflüssigkeit sein kann, der koaxial zur Rotorwelle 6 liegenden Düse 17 zugeführt und durch diese in das Rohr 12 im Inneren der Rotorwelle 6 eingebracht. Bei der Ausführungsform der Fig. 5 mündet die Düse 17 direkt in das Rohr 12 und die beiden Bauteile überschneiden einander in Längsrichtung.

Um ein Eindringen des Kühlmittels in das Motorinnere zu verhindern, ist am äußeren nichtantriebsseitigen Ende der Rotorwelle 6 eine Gleitringdichtung 52 und eine daran anschließende Schottwand 53 vorhanden. Das aus der Rotorwelle 6 durch deren nichtantriebsseitiges Ende 6a abfließende Kühlmittel sammelt sich im im wesentlichen ringförmigen Innenraum des Kühlungsgehäuses 54, von wo es durch die Kühlmittelabflußöffnung 55 ausgeleitet wird. Das erwärmte Kühlmittel aus dem Gehäuse 54 wird zu einem Wärmetauscher geleitet. Bei der baulich und wirtschaftlich besonders vorteilhaften Verwendung des gleichen Kühlmittels für die Rotorwelle 6 und auch den Stator 1 wird eine hydraulische Serienschaltung der beiden Kühlzweige günstig sein, bei welcher aufgrund der erforderlichen starken Kühlung der Lagerung der Rotorwelle 6 vorteilhafterweise zuerst die Rotorwelle 6 und anschließend der Kühlmantel 10 des Stators 1 vom Kühlmittel durchströmt wird, bevor dieses zum Wärmetauscher geleitet wird.

In der vergrößerten Ansicht der Fig. 6 ist auch beispielhaft ein möglicher Aufbau der Gleitringdichtung 52 dargestellt. An der Schottwand 53 ist ein gleich dieser Wand 53 feststehender Dichtring 55 in einer Lagerbuchse 56 gehalten. Am nichtantriebsseitigen Ende 6a der Rotorwelle 6 sitzt eine weitere Lagerbuchse 57, welche mit der Welle 6 mitrotiert und einen ebenfalls mitrotierenden zweiten Dichtring 58 hält. Der rotierende Dichtring 58 wird von einer Feder 59 gegen den ersten, feststehenden Dichtring 55 gepreßt und ist gegenüber dem Rohr 12 bzw. der Lagerbuchse 57 mittels herkömmlicher Dichtringe 60 abgedichtet. Die gegeneinander mit Umfangsgeschwindigkeit relativ zueinander rotierenden Dichtringe 55, 58 bestehen vorzugsweise aus Siliziumkarbid oder einem gleichartigen Material und werden vorteilhafterweise durch das im Inneren des Endes 6a der Rotorwelle 6 an der Gleitringdichtung 52 vorbeiströmende bzw. das im Inneren des Kühlungsgehäuses 54 befindliche Kühlmittel gekühlt und gleichzeitig auch geschmiert, sodaß eine ausgezeichnete Dichtwirkung kombiniert mit nur geringem Verschleiß gewährleistet werden kann.

Eine andere Ausführungsform der Gleitringdichtung 52 ist in der Fig. 7 dargestellt. Dabei ist der mit der Welle 6 mitrotierende Dichtring 58 an deren stirnseitigem Ende in einer dafür vorgesehenen Ausnehmung aufgenommen und der stehende Dichtring 55 schließt axial an den rotierenden Dichtring 58 an. Der stehende Dichtring 55 wird von einer Feder 59 gegen den zweiten Dichtring 58 gepreßt und ist gegen die Schottwand 53 noch durch einen herkömmlichen Dichtring 60 abgedichtet. Die Schottwand 53 selbst weist einen auf die Rotorwelle 6 hin zurückkragenden Abschnitt 53a auf, der zwischen sich und dem den Dichtungsring 55 tragenden Schottwandabschnitt einen ringförmigen Auffangraum einschließt, in dem durch die Gleitringdichtung 52 hindurchtretendes Kühlmittel aufgefangen und über eine Leckagebohrung 53b in der Schottwand 53 abgeleitet, vorzugsweise dem Kühlmittelreservoir zugeführt, wird. Damit kann das austretende Kühlmittel nicht in den Motorinnenraum gelangen. Um diesen Vorteil noch besser zur Geltung zu bringen, kann auf der Rotorwelle 6 oder damit verbundenen Bauteilen eine ringförmig radial nach außen hin auskragende Schleuder- bzw. Leitfläche 6b vorgesehen sein, die das aus der Gleitringdichtung 52 austretende Kühlmittel in den Zwischenraum zwischen den Schottwandabschnitten 53, 53a leitet, sodaß es weiter durch die vorzugsweise senkrecht nach unten weisende Bohrung 53b ausfließen kann.

Weiters wird aus der Detailansicht der Fig. 6 noch eine Ausführungsform der Düse 17 zur Einbringung des Kühlmittels in das Kanalsystem der Rotorwelle 6, vorzugsweise in das Rohr 12 im Inneren der Rotorwelle 6 deutlich. Das Rohr 12 bzw. das Anfangsstück des Kanalsystems in der Rotorwelle 6 und die Düse 17 überschneiden einander in axialer Richtung und zwischen der Außenseite der Düse 17 und der Innenwandung des Rohres 12 ist ein Ringspalt 61 freigehalten. Dieser Ringspalt 61 sorgt einerseits für eine reibungslose Drehbarkeit des Rohres 12 gegenüber der im Gehäuse 54 beispielsweise mittels Verschraubung feststehend gehaltenen Düse 17 und andererseits für einen ausreichend hohen Druckabfall zwischen der Ausmündungsstelle der Düse 17 und dem nichtantriebsseitigen Ende des Rohres 12. Dieser Druckabfall bewirkt eine weitestgehende Minimierung der Leckverluste an Kühlmittel aus dem Rohr 12 über den Überschneidungsbereich, sodaß der überwiegende Teil der Kühlmittelströmung durch die Kanäle in der Rotorwelle 6 strömt. Damit sind weitere Dichtungen, wie etwa Gleitringdichtungen ähnlich der zuvor beschriebenen, vermeidbar und der Einbau des erfindungsgemäßen Wellenkühlsystems ist nur mit geringem axialem Dimensionszuwachs verbunden, sodaß eine optimal gekühlte und doch kompakte Konstruktion gegeben ist.

Allenfalls kann vorteilhafterweise zumindest eine Einrichtung zur weiteren Erhöhung des Druckverlustes im Überschneidungsbereich von Düse 17 und Anfangsstück des Kanalsystems der Rotorwelle 6 vorgesehen sein, beispielsweise ein Dichtring od. dgl. Natürlich ist es aber noch vorteilhafter, wenn schleifende Teile zwischen der feststehenden Düse 17 und dem rotierenden Kanalsystem bzw. der Rotorwelle 6 vermieden werden. In diesem Fall kann die Erhöhung des Druckverlustes zur Herabsetzung der Leckverluste an Kühlmittel durch die geometrische Ausbildung der Außenseite der Düse 17 erreicht werden, indem beispielsweise wie dargestellt ringförmige Eindrehungen 17a bzw. Nuten als Strömungshindernisse vorgesehen sind.

## Patentansprüche

1. Kühlsystem für eine elektrische Maschine mit einer innengekühlten Rotorwelle und einem vorzugsweise außen gekühlten Stator, insbesondere einen Traktionsmotor, bei dem die Rotorwelle (6) hohl ausgeführt ist und im Hohlraum (11) ein Rohr (12) eingesetzt ist, sodaß ein innerer Kanal und ein diesen inneren Kanal ringspaltförmig umgebender äußerer Kanal gebildet ist, durch welche das vorzugsweise flüssige Kühlmittel geführt wird, wobei die Einbringungs- und die Ausbringungsöffnung für das Kühlmittel in das Kanalsystem vorzugsweise auf der selben Seite der Rotorwelle (6) vorgesehen ist und eine Düse (17) zur Einbringung des Kühlmittels in das innere Rohr (12) in der Rotorwelle (6) koaxial zu dieser Welle vorgesehen ist und sich die Düse (17) und der Anfangsabschnitt (6a) des Kanalsystems der Rotorwelle (6) oder des Rohres (12) axial überschneiden und im Überschneidungsbereich zwischen der Außenseite der Düse (17) und der Innenseite des Rohres (12) ein Ringspalt (61) freigelassen ist, dadurch gekennzeichnet, daß im Überschneidungsbereich (6a) Einrichtungen zur Erhöhung des Druckverlustes zwischen den beiden Enden des Ringspaltes (61) vorgesehen sind.

2. Kühlsystem nach Anspruch 1, dadurch gekennzeichnet, daß die Einrichtungen zur Erhöhung des Druckverlustes als geometrische Ausformungen der Außenwand der Düse (17), beispielsweise als zumindest eine ringnutförmige Eindrehung (17a) an der Außenseite der Düse (17), ausgebildet sind.

3. Kühlsystem nach Anspruch 1 oder 2, dadurch gekennzeichnet, daß ein Ende des Rohres (12) über die Düse (17) mit dem Kühlmittel versorgt wird, das Rohr (12) an seinem anderen Ende in einen Hohlraum (11) der Rotorwelle (6) mündet, aus welchem das Kühlmittel entlang der Außenseite des Rohres (12) zum ersten Ende des Rohres (12) mit der Düse (17) zurückgeführt und radial außerhalb der Düse (17) von der Rotorwelle (6) abgeführt wird.

4. Kühlsystem nach einem der vorhergehenden Ansprüche, dadurch gekennzeichnet, daß die Düse (17) über ein Kanalsystem mit Öl aus dem Ölraum (18) des Getriebekastens (15) versorgt wird, welches nach Durchströmen der Rotorwelle (6) radial außerhalb der Düse (17) wieder am antriebsseitigen Ende der Rotorwelle (6) in den Ölraum (18) des Getriebekastens (15) zurückgeführt wird.

5. Kühlsystem nach Anspruch 4, dadurch gekennzeichnet, daß ein Kleinrad (13) des im Getriebekasten (15) untergebrachten Getriebes am antriebsseitigen Ende der Rotorwelle (6) in diese eingesetzt ist, einen Kanal in Fortsetzung des Rohres (12) besitzt und die Düse (17) in diesen Kanal des Kleinrades (13) mündet.

6. Kühlsystem nach Anspruch 5, dadurch gekennzeichnet, daß um den in die Rotorwelle (6) eingesetzten Teil des Kleinrades (13) mit der Düse (17) eine Anzahl von Kanälen (19) im antriebsseitigen Teil der Rotorwelle (6) vorgesehen ist, welche einerseits in den Hohlraum (11) der Rotorwelle (6) und andererseits in den Ölraum (18) des Getriebekastens (15) münden.

7. Kühlsystem nach einem der Ansprüche 1 bis 3, dadurch gekennzeichnet, daß die Düse (17) für das Kühlmittel am nichtantriebsseitigen Ende (6a) der Rotorwelle (6) vorgesehen ist und das Kühlmittel auch an diesem Ende (6a) wieder von der Rotorwelle (6) abgeführt wird.

8. Kühlsystem nach Anpruch 7, dadurch gekennzeichnet, daß das nichtantriebsseitige Ende (6a) des Kanalsystems der Rotorwelle (6) einschließlich des allfälligen Rohres (12) mittels einer Gleitringdichtung unter Verwendung von vorzugsweise Siliziumcarbid-Ringen (55, 58) gegen den Motorinnenraum abgedichtet ist.

9. Kühlsystem nach Anspruch 8, dadurch gekennzeichnet, daß die Gleitringdichtung (52) axial anschließend an der Stirnseite der Rotorwelle (6) vorgesehen ist und zwischen zwei Schottwandabschnitten (53, 53a) ein Kühlmittel-Auffangraum mit einer Ausflußöffnung (53b) für das Kühlmittel gebildet ist.

## Claims

1. A cooling system for an electric machine having an internally cooled rotor shaft and a preferably externally cooled stator, more particularly a traction motor, wherein the rotor shaft (6) is constructed hollow and a tube (12) is inserted in the cavity (11), thus forming an inner channel and an outer channel enclosing said inner channel with an annular gap, the preferably liquid coolant passing through said channels, and the delivery and discharge opening for the coolant in the channel system is provided preferably on the same side of the rotor shaft (6) and a nozzle (17) is provided coaxially of the rotor shaft (6) for the delivery of the coolant to the inner tube (12) therein, while the nozzle (17) and the initial portion (6a) of the channel system of the rotor shaft (6) or the tube (6) overlap axially, an annular gap (61) being left between the outside of the nozzle (17) and the inside of the tube (12) in the zone of overlap, characterised in that devices to increase the pressure loss between the two ends of the annular gap (61) are provided in the zone (6a) of overlap.

2. A cooling system according to Claim 1, characterised in that the devices for increasing the pressure loss take the form of geometrical configurations of the outer wall of the nozzle (17), for example, at least one annular-groove-shaped recess (17a) on the outside of the nozzle (17).

3. A cooling system according to Claim 1 or 2, characterised in that one end of the tube (12) is supplied with the coolant via the nozzle (17), the tube (12) discharging at its other end into a cavity (11), from which the coolant is returned to the first end of the tube (12) having the nozzle (17) along the outside of the tube (12) and is removed from the rotor shaft (6) radially outside the nozzle (17).

4. A cooling system according to one of the preceding claims, characterised in that the nozzle (17) is supplied from the oil chamber (18) of the gear box (15) via a channel system with oil which, after flowing through the rotor shaft (6) is returned radially outside the nozzle (17) at the drive side end of the rotor shaft (6) to the oil chamber (18) of the gear box (15).

5. A cooling system according to Claim 4, characterised in that a pinion (13) of the transmission housed in the gear box (15) is inserted on the rotor shaft (6) at the drive side end thereof and has a channel in a continuation of the tube (12), the nozzle (17) discharging into said channel of the pinion (13).

6. A cooling system according to Claim 5, characterised in that provided in the drive side portion of the rotor shaft (6) around that portion of the pinion (13) which is inserted in the rotor shaft (6) are a number of channels (19) which discharge on the one hand into the cavity (11) of the rotor shaft (6) and on the other hand into the oil chamber (18) of the gear box (15).

7. A cooling system according to one of Claims 1 to 3, characterised in that the nozzle (17) for the coolant is provided at the non-drive side end (6a) of the rotor shaft, and the coolant is also removed from the rotor shaft (6) at said end (6a).

8. A cooling system according to Claim 7, characterised in that the non-drive side end (6a) of the channel system of the rotor shaft (6), including any tube (12) is sealed off against the interior of the motor by means of a slide ring seal, preferably using silicon carbide rings (55, 58).

9. A cooling system according to Claim 8, characterised in that the slide ring seal (52) is provided axially adjoining the end face of the rotor shaft (6), and a coolant intercepting space with a discharge opening (53b) for the coolant is formed between two partition wall portions (53, 53a).

## Revendications

1. Système de refroidissement pour une machine électrique comprenant un arbre de rotor à refroidissement interne et un stator de préférence à refroidissement externe, en particulier pour un moteur à traction, dans lequel l'arbre de rotor (6) est creux et un tube (12) est inséré dans l'espace creux (11) si bien qu'un canal interne et un canal externe qui, en entourant ce canal interne, constitue une fente annulaire, sont formés, canaux qui guident l'agent réfrigérant de préférence fluide, l'orifice d'entrée et de sortie pour l'agent réfrigérant étant prévu dans le système de canal, de préférence du même côté de l'axe de rotor (6) et un injecteur (17) étant prévu pour l'introduction de l'agent réfrigérant dans le tube interne (12) dans l'arbre de rotor (6) coaxialement à cet arbre, ainsi que l'injecteur (17) et la section de début (6a) du système de canal de l'arbre de rotor (6) ou du tube (12) se recoupant axialement, et une fente annulaire (61) étant libérée dans la zone d'intersection entre la face externe de l'injecteur (17) et la face interne du tube (12), caractérisé en ce qu'il est prévu, dans la zone d'intersection (6a), des dispositifs pour l'augmentation de la perte de pression entre les deux extrémités de la fente annulaire (61).

2. Système de refroidissement selon la revendication 1, caractérisé en ce que les dispositifs pour l'augmentation de la perte de pression sont conçus comme des déformations géométriques de la paroi externe de l'injecteur (17) par exemple sous forme d'au moins une gorge tournée dans la masse en forme de rainure annulaire (17a) sur la face externe de l'injecteur (17).

3. Système de refroidissement selon la revendication 1 ou 2, caractérisé en ce qu'une extrémité du tube (12) est alimentée par l'injecteur (17) en réfrigérant, en ce que le tube (12) débouche à son autre extrémité dans une cavité (11) de l'arbre de rotor (6) depuis laquelle l'agent réfrigérant est ramené le long de la face externe du tube (12) à la première extrémité du tube (12) avec l'injecteur (17) et est évacué de l'arbre de rotor (6) radialement à l'extérieur de l'injecteur (17).

4. Système de refroidissement selon l'une des revendications précédentes, caractérisé en ce que l'injecteur (17) est alimenté en huile par un système de canal provenant de la chambre à huile (18) de la boite d'engrenages (15), huile qui, après avoir traversé l'arbre de rotor (6) radialement à l'extérieur de l'injecteur (17), est ramenée à nouveau, à l'extrémité, côté entraînement de l'arbre de rotor (6), dans la chambre à huile (18) de la boite d'engrenages (15).

5. Système de refroidissement selon la revendication 4, caractérisé en ce qu'un pignon (13) de l'engrenage, logé dans la boîte d'engrenages (15), est inséré dans l'arbre de rotor (6), à son extrémité, côté entraînement, en ce qu'il présente un canal dans la continuité du tube (12) et en ce que l'injecteur (17) débouche dans ce canal du pignon (13).

6. Système de refroidissement selon la revendication 5, caractérisé en ce qu'il est prévu, autour de la partie du pignon (13), insérés dans l'arbre de rotor (6), avec l'injecteur (17), côté entraîné de l'arbre de rotor (6), plusieurs canaux (19) qui débouchent, d'une part, dans l'espace creux (11) de l'arbre de rotor (6) et, d'autre part, dans la chambre à huile (18) de la boîte d'engrenages (15).

7. Système de refroidissement selon l'une des revendications 1 à 3, caractérisé en ce que l'injecteur (17) pour le réfrigérant est prévu à l'extrémité (6a), du côté non entraîné, de l'arbre de rotor (6), et le réfrigérant est également évacué de l'arbre de rotor (6) également par cette extrémité (6a).

8. Système de refroidissement selon la revendication 7, caractérisé en ce que l'extrémité (6a), du côté non entraîné, du système de canaux de l'arbre de rotor (6) y compris le tube éventuel (12), est rendue étanche vis-à-vis de l'intérieur du moteur, au moyen d'une garniture d'étanchéité à anneau glissant en utilisant des anneaux en carbure de silicium (55, 58) de préférence.

9. Système de refroidissement selon la revendication 8, caractérisé en ce que la garniture d'étanchéité à anneau glissant (52) est prévue axialement à la suite de la face avant de l'arbre de rotor (6) et en ce qu'il est formé, pour le réfrigérant entre deux sections de cloison (53, 53a), un espace de récupération de réfrigérant avec un orifice de sortie (53b).
